# EUROPÄISCHE PATENTSCHRIFT

(11) **EP 2 838 947 B1**
(45) Veröffentlichungstag und Bekanntmachung des Hinweises auf die Patenterteilung: **05.08.2015**
(21) Anmeldenummer: 13715668.3
(22) Anmeldetag: 05.04.2013
(51) Int. Cl.: C08K 5/17, C08K 5/5419, C08L 83/04, C08K 5/00, C08G 77/08

(54) **HÄRTERZUSAMMENSETZUNGEN FÜR KONDENSATIONSVERNETZENDE RTV-2-SYSTEME**
CURING AGENT COMPOSITIONS FOR CONDENSATION-CROSSLINKING RTV-2 SYSTEMS
COMPOSITIONS DE DURCISSEUR POUR SYSTÈMES RTV-2 DE RÉTICULATION PAR CONDENSATION

(30) Priorität: 19.04.2012 DE 102012206489
(43) Veröffentlichungstag der Anmeldung: 25.02.2015
(73) Patentinhaber: Wacker Chemie AG, 81737 München (DE)
(72) Erfinder: ZICHE, Wolfgang, 84489 Burghausen (DE)
(74) Vertreter: Fritz, Helmut
(86) Internationale Anmeldenummer: PCT/EP2013/057226
(87) Internationale Veröffentlichungsnummer: WO 2013/156326

(56) Entgegenhaltungen:
- DE-A1-102004 046 180
- US-A1- 2003 069 379
- US-A1- 2011 009 558
- US-A1- 2011 046 304
- US-A1- 2012 065 308

## Beschreibung

Die Erfindung betrifft Härterzusammensetzungen H für kondensationsvernetzende RTV-2-Systeme, die einen Aminoalkylalkohol enthalten und RTV-2-Systeme.

Zweikomponentige (2K) silanhärtende Zusammensetzungen, bei denen hydrolysierbare Silylgruppen oder Silanolgruppen aufweisende Polymere mit hydrolysierbare Gruppen aufweisenden Siliciumverbindungen vernetzt werden, sind im Stand der Technik schon länger bekannt und werden oft als Kleb- und Dichtstoffe in diversen Applikationen eingesetzt.
Bei Raumtemperatur vernetzende zweikomponentige Systeme werden als "room temperature vulcanizing 2 Part"-Systeme (RTV-2) bezeichnet. Eine der beiden Komponenten wird häufig als Polymerzusammensetzung oder als A-Komponente bezeichnet. Die zweite Komponente wird häufig Härterzusammensetzung oder auch als B-Komponente genannt.
Als katalytisch aktiver Bestandteil sind Organozinnverbindungen äußerst effektiv, jedoch ist ihre Verwendung aufgrund ihrer toxikologischen Eigenschaften zunehmend unerwünscht. Alternative Katalysatorsysteme wie z.B. in US 2011/9558 sind entweder kommerziell nicht erhältlich, aufwendig herzustellen und in RTV-2-Systemen auch nicht so effektiv wie Organozinnverbindungen.

Gegenstand der Erfindung sind Härterzusammensetzungen H für kondensationsvernetzende RTV-2-Systeme enthaltend
(A) mindestens einen an Siliciumatome gebundenene hydrolysierbare Gruppen aufweisenden Vernetzer,
(B) mindestens einen Katalysator, der ausgewählt wird aus Verbindungen von Titan, Cer, Zirkonium, Molybdän, Mangan, Kupfer, Zink, Bismut, Lithium, Strontium oder B und
(C) mindestens einen Aminoalkylalkohol.

Die Härterzusammensetzungen H bewirken in RTV-2-Systemen eine effektive Aushärtung. Der Aminoalkylalkohol (C) verstärkt die Wirksamkeit des Katalysators (B). Die Härterzusammensetzung enthalten keine Organozinnverbindungen. Mit den Härterzusammensetzungen H können 2K-silanhärtende Zusammensetzungen auf einfache Weise formuliert werden.

Die Vernetzer (A) sind vorzugsweise Organosiliciumverbindungen der allgemeinen Formel (I)

ZₐSiR¹₍₄₋ₐ₎ (I),

wobei
- R¹: unabhängig voneinander gleich oder verschieden sein kann und einwertige, gegebenenfalls substituierte Kohlenwasserstoffreste, die durch nicht benachbarte Heteroatome ausgewählt aus Sauerstoff- und Stickstoffatomen unterbrochen sein können,
- Z: unabhängig voneinander gleich oder verschieden sein kann und hydrolysierbare Reste und
- a: die Werte 3 oder 4 bedeuten,
sowie deren Teilhydrolysate.

Bei den Teilhydrolysaten kann es sich dabei um Teilhomohydrolysate handeln, d. h. Teilhydrolysate von einer Art von Organosiliciumverbindung der allgemeinen Formel (I), wie auch um Teilcohydrolysate, d. h. Teilhydrolysate von mindestens zwei verschiedenen Arten von Organosiliciumverbindungen der allgemeinen Formel (I). Diese Vernetzer bzw. Teilhydrolysate haben vorzugsweise ein maximales Gewichtsmittel Mw von 1200 g/mol.
Obwohl in der allgemeinen Formel (I) nicht angegeben, können diese Organosiliciumverbindungen herstellungsbedingt einen geringen Anteil von Hydroxylgruppen, bevorzugt bis maximal 5 % aller Si-gebundenen Reste, aufweisen.
Handelt es sich bei den Vernetzern (A) um Teilhydrolysate von Organosiliciumverbindungen der allgemeinen Formel (I), so sind solche mit bis zu 10 Siliciumatomen bevorzugt.
Bevorzugt handelt es sich bei Rest R¹ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere bevorzugt aus Oxyethylen- und/oder Oxypropyleneinheiten aufgebaut sind, besonders bevorzugt um Alkylreste mit 1 bis 12, insbesondere 1 bis 6 Kohlenstoffatomen, insbesondere um den Methylrest. Es kann sich bei Rest R¹ aber auch um zweiwertige Reste handeln, die z.B. zwei Silylgruppen miteinander verbinden.
Beispiele für Reste R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der alpha- und der beta-Phenylethylrest.
Beispiele für substituierte Reste R¹ sind Methoxyethyl-, Ethoxyethyl-, der Ethoxyethoxyethylrest und der 2-Aminoethylaminorest.
Beispiele für zweiwertige Reste R¹ sind Polyisobutylendiylreste und propandiylterminierte Polypropylenglykolreste.
Für Rest R¹ sind Kohlenwasserstoffreste mit 1 bis 12 Kohlenstoffatomen bevorzugt und der Methyl- und der Vinylrest besonders bevorzugt.
Beispiele für Z sind alle bisher bekannten hydrolysierbaren Reste, wie z. B. über Sauerstoffatom oder Stickstoffatom an Siliciumatom gebundene, gegebenenfalls substituierte Kohlenwasserstoffreste.
Bevorzugt handelt es sich bei Rest Z um Rest -OR², wobei R² substituiere oder unsubstituierte Kohlenwasserstoffreste, die durch Sauerstoffatome unterbrochen sein können, bedeutet. Beispiele für z sind Methoxy-, Ethoxy-, n-Propoxy-, i-Propoxy-, n-Butoxy-, i-Butoxy-, s-Butoxy-, tert-Butoxy- und 2-Methoxyethoxyrest, Aminoreste, wie Methylamino-, Dimethylamino-, Ethylamino-, Diethylamino- und Cyclohexylaminorest, Amidoreste, wie N-Methylacetamido- und Benzamidorest, Aminoxyreste, wie der Diethylaminoxyrest, Oximoreste, wie Dimethylketoximo-, Metyhlethylketoximo- und Methylisobutylketoximorest, und Enoxyreste, wie der 2-Propenoxyrest sowie Acyloxyresten wie beispielsweise Acetylgruppen.
Bevorzugt handelt es sich bei den Vernetzern (A) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 1,2-Bis(trimethoxysilyl)ethan, 1, 2-Bis(triethoxysilyl)ethan, sowie Teilhydrolysate der genannten Organosiliciumverbindungen, wie z. B. Hexaethoxydisiloxan.
Besonders bevorzugt handelt es sich bei den Vernetzern (A) um Tetramethoxysilan, Tetraethoxysilan, Tetrapropoxysilan, Methyltrimethoxysilan, Methyltriethoxysilan, Vinyltrimethoxysilan, Vinyltriethoxysilan, Phenyltrimethoxysilan, 1,2-Bis(trimethoxysilyl)ethan, 1,2-Bis(triethoxysilyl)ethan, sowie deren Teilhydrolysate, insbesondere um Tetraethoxysilan, 1,2 Bis(triethoxysilyl)ethan, Vinyltriethoxysilan und deren Teil- und Mischhydrolysate. Die Vernetzer (A) sind vorzugsweise handelsübliche Produkte bzw. können nach in der Siliciumchemie bekannten Verfahren hergestellt werden.
Die Vernetzer (A) werden bevorzugt in solchen Mengen eingesetzt, dass sich ein mindestens zweifach molarer Überschuss hydrolysierbare oder hydrolysierte Vernetzerfunktionen bezogen auf den Endgruppenanteil der zu vernetzenden Bestandteile ergibt. Vorzugsweise wird ein molares Verhältnis von Vernetzerfunktionen zu den zu vernetzenden Gruppen von 2:1 bis 10:1 eingestellt.

Als Katalysatoren (B) eigenen sich prinzipiell bekannte Katalysatoren für die Kondensationsreaktion wie beispielsweise Verbindungen des Titans, wie Organotitanate oder Chelatkomplexe, des weiteren beispielsweise Cer-, Zirkonium-, Molybdän-, Mangan-, Kupfer- oder Zinkverbindungen oder deren Salze, Alkoxylate oder Chelatkomplexe, auch katalytisch aktive Verbindungen der Hauptgruppen oder Salze von Bismut, Li, Sr oder B.
Bevorzugt sind als Katalysator (B) die Metallverbindungen von Cer, Zirkonium, Bismut und Lithium. Besonders bevorzugt werden deren Alkoxylate und Carboxylate.

Bei der Aminoalkylalkohol-Komponente (C) handelt es sich bevorzugt um Verbindungen der allgemeinen Formel (II)

R³R⁴N-R⁵-OH (II),

bei der
- R³, R⁴: unabhängig voneinander H bedeuten oder die Bedeutungen und bevorzugten Bedeutungen von R¹ aufweisen und
- R⁵: zweiwertiger Alkylrest mit 2 bis 12 Kohlenstoffatomen bedeutet, der durch Heteroatome, wie Sauerstoff-, Stickstoff- und Schwefelatome unterbrochen oder durch Amino-, Hydroxy- oder Alkoxygruppen substituiert sein kann.

Bevorzugt handelt es sich bei Rest R⁵ um zweiwertige Alkylreste mit 2 bis 6 Kohlenstoffatomen. Die Aminogruppen am Rest R⁵ weisen bevorzugt Wasserstoffatome oder Alkylreste mit 1 bis 6 Kohlenstoffatomen auf. Die Alkoxygruppen am Rest R⁵ weisen bevorzugt Alkylreste mit 1 bis 6 Kohlenstoffatomen auf.

In den Härterzusammensetzungen H sind pro 100 Gewichtsteile Vernetzer (A) vorzugsweise 1 bis 500 Gewichtsteile, besonders bevorzugt 5 bis 200 Gewichtsteile, insbesondere 10 bis 80 Gewichtsteile Katalysator (B) enthalten.

In den Härterzusammensetzungen H sind pro 100 Gewichtsteile Vernetzer (A) vorzugsweise 0,5 bis 300 Gewichtsteile, besonders bevorzugt 2 bis 100 Gewichtsteile, insbesondere 5 bis 40 Gewichtsteile Aminoalkylalkohol (C) enthalten.

Ein weiterer Gegenstand der Erfindung sind RTV-2-Systeme, welche die Härterzusammensetzungen H und feuchtigkeitshärtbare silylfunktionelle Polymere (D) enthalten, die Silylgruppen der allgemeinen Formel (III)

-L [-SiR⁶_{2-b}X_{b}-O] ₙ-SiR⁶_{3-c}X_{c} (III)

besitzen, wobei
- L: eine zweiwertige organische Gruppe,
- X: unabhängig voneinander eine hydrolysierbare Gruppe,
- R⁶: ein Kohlenwasserstoffrest,
- b: die Werte 0, 1 oder 2,
- c: die Werte 0, 1, 2 oder 3,
- b+c: mindestens 1 und
- n: ganzzahlige Werte von 0 bis 16 bedeuten.

Die Härterzusammensetzung H wird in RTV-2-Systemen zusammen mit einer zweiten Komponente eingesetzt. Solche RTV-2-Systeme sind dem Fachmann seit langem bekannt. Sie enthalten im Falle von Silicon-RTV-2 üblicherweise hydroxyterminierte Polydimethylsiloxane als vernetzungsfähige Polymere, gegebenenfalls Wasser und meist trimethylsilyl-terminierte Polydimethylsiloxane als Weichmacherkomponente.
Im Falle des Einsatzes feuchtigkeitshärtbarer, silanfunktioneller Polymere (D) in der Härterkomponente, enthält die zweite Komponente zur Aushärtung benötigtes Wasser, auch in Form feuchter Füllstoffe oder Hydrate, optional Weichmacher, die mit der Polymerbasis der Polymere (D) kompatibel sind.

Beispiele für L sind zweiwertige Kohlenwasserstoffreste mit 1 bis 20, insbesondere 1 bis 6 Kohlenstoffatomen wie Ethylenrest, Propylenrest, Butylenrest oder Hexylenrest. Beispiele für X sind Alkoxyreste, insbesondere mit 1 bis 6 Kohlenstoffatomen und Hydroxyreste.
Beispiele für R⁶ sind Alkylreste mit 1 bis 20 Kohlenstoffatomen, Arylreste mit 1 bis 20 Kohlenstoffatomen oder Aralkylreste mit 7 bis 20 Kohlenstoffatomen und bevorzugt die für R¹ bevorzugt genannten Alkylreste.

Das Polymerrückgrat der Polymere (D) kann vielfältig variiert werden. So können wie in WO 2010/111174 A bevorzugt Polymere mit niedriger Permeabilität verwendet werden, Polyester-, Polyether- und Polyurethanbasierte Polymere (D) werden in WO 2009/064428 A und in WO 2008153392 A beschrieben. Vorzugsweise besteht das Polymerrückgrat der silylfunktionellen Polymere (D) aus Polymeren, die ausgewählt werden aus Polyester, Polyether, Polyurethan und Polyorganosiloxan.
Bevorzugt enthält das Polymerrückgrat der Polymere (D) mindestens 80 Gew.-% Polyorganosiloxan, besonders bevorzugt besteht das Polymerrückgrat der Polymere (D) aus Polyorganosiloxan, insbesondere aus Polydimethylsiloxan.

Die Polymere (D) besitzen vorzugsweise eine Viskosität bei 25°C von 100 bis 350 000 mPa·s, besonders bevorzugt von 200 bis 200 000 mPa·s, insbesondere von 500 bis 80 000 mPa·s.

Die RTV-2-Systeme enthalten Katalysator (B) in den für die Kondensationsreaktion üblichen Mengen, vorzugsweise bei 50 bis 5000 ppm, jeweils bezogen auf das Metall, beispielsweise bei Li-Verbindungen im Bereich von 100-1000 ppm und bei Bismutverbindungen im Bereich von 2000-5000 ppm, jeweils bezogen auf das Metall und das Gewicht der RTV-2-Systeme.

Die RTV-2-Systeme können als weitere Komponente Haftvermittler (E) enthalten. Sie werden als funktionelle Silane oder Kupplungsagenzien betrachtet. Beispiele für die in den erfindungsgemäßen Massen eingesetzten Haftvermittler (E) sind Silane und Organopolysiloxane mit funktionellen Gruppen, wie beispielsweise solche mit Glycidoxy-, Amino- oder Methacryloxyresten. Des Weiteren können als Haftvermittler (E) auch Silane mit hydrolysierbaren Gruppen und SiC-gebundenen Vinyl-, Acryloxy-, Methacryloxy-, Epoxy-, Säureanhydrid-, Säure-, Ester-, cyanurato-, carbamato- oder ureidofunktionelle oder Ethergruppen sowie deren Teil- und Mischhydrolysate verwendet werden. Bevorzugt als Haftvermittler sind Amino-, acryl-, epoxy-, cyanurato-, carbamato- oder ureidofunktionelle Silane mit hydrolysierbaren Gruppen und deren Teilhydrolysate. Bevorzugt ist (E) in den RTV-2-Systeme solchen Mengen enthalten, dass auf 100 Gewichtsteile der katalysierten, anwendungsfertigen RTV-2 Mischung einen Anteil von vorzugsweise bis 50 Gewichtsteilen, besonders bevorzugt 0,1 bis 20 Gewichtsteilen, insbesondere 0,5 bis 10 Gewichtsteilen (E) enthält.

Die RTV-2-Systeme können darüber hinaus weitere Bestandteile (F), die dem Fachmann seit langem bekannt sind, enthalten. Beispiele für (F), die bei den RTV-2-Systemen verwendet werden können, sind Füllstoffe, wie verstärkende und nicht verstärkende Füllstoffe wie Kieselsäure, Ruß, Quarz, Kreide, Diatomeenerde. Weitere Beispiele für (F) sind Weichmacher, lösliche Farbstoffe, anorganische und organische Pigmente, Lösungsmittel, Fungicide, Duftstoffe, Dispergierhilfsmittel, Additive zur Optimierung von Rheologie , Korrosionsinhibitoren, Oxidationsinhibitoren, Lichtschutzmittel Hitzestabilisatoren, flammabweisend machende Mittel und Mittel zur Beeinflussung der elektrischen Eigenschaften.

Die Herstellung der Härterzusammensetzung H kann beispielsweise durch Mischen der einzelnen Komponenten (A), (B) und (C) erfolgen. Die weiteren Komponenten (D), (E) und (F) werden bei Bedarf ebenfalls eingemischt.

Die Härterzusammensetzung H wird als eine Komponente in kondensationsvernetzenden RTV-2-Zusammensetzungen eingesetzt. Diese kondensationsvernetzenden RTV-2-Zusammensetzungen finden wiederum beispielsweise als Klebe- und Dichtstoff in diversen Applikationen ihre Anwendung.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C. Die Viskositäten wurden bei 25°C gemessen.

### Beispiel 1

4 g Borchi^{®} Kat 24 (Bismut (III) neodecanoat von OMG Borchers GmbH, 40764 Langenfeld, Germany) und 1,33 g 2-{[2-(Dimethylamino)ethyl]-methylamino}ethanol werden 1 h auf 150°C erwärmt. Die Mischung ist klar und viskos.

In 50 g eines silanolterminierten Polydimethylsiloxans (Viskosität 1000 mPa·s) werden 0,05 g einer nichtionogen formulierten Öl-in Wasser Emulsion eines Polydimethylsiloxanes mittlerer Viskosität (50% Wasser) eingemischt. Dazu werden 0,5 g der Borchi^{®} Kat-Lösung gegeben. Die Konsistenz des Gemisches verändert sich nicht über 24 h. Es werden 1 g WACKER^{®} SILIKAT TES 40 WN (Tetraethoxysilan von Wacker Chemie AG, Deutschland) eingerührt. Die Mischung ist nach 2 h durchvulkanisiert.

### Beispiel 2

2 g Borchi^{®} Kat 24 und 1,33 g 2-{[2-(Dimethylamino)ethyl]-methylamino}ethanol werden 1 h auf 130°C erwärmt. Die Mischung ist klar und viskos und wird mittels IR Spektroskopie untersucht: es wird keine Amid- oder Esterbildung festgestellt, das Spektrum entspricht der Überlagerung der beiden Einzelkomponenten.

In 50 g eines silanolterminierten Polydimethylsiloxans (Viskosität 1000 mPas) werden 0,05 g einer nichtionogen formulierten Öl-in Wasser Emulsion eines Polydimethylsiloxanes mittlerer Viskosität (50% Wasser) eingemischt. Dazu werden 0,5 g der Borchi^{®} Kat-Lösung gegeben. Es werden 1 g WACKER^{®} SILIKAT TES 40 WN eingerührt. Der Verlauf der Vulkanisation wird mittels eines Rheometers verfolgt (Anton Paar MCR301 mit PP25-SN Einmalmesssystem; [d=0,5 mm]. Frequenz 1 Hz, Deformation 10%). tan δ = 1 wurde nach 100 min erreicht.

### Vergleichsbeispiel 3 (nicht erfindungsgemäss)

In 50 g eines silanolterminierten Polydimethylsiloxans (Viskosität 1000 mPas) werden 0,05 g einer nichtionogen formulierten Öl-in Wasser Emulsion eines Polydimethylsiloxanes mittlerer Viskosität (50% Wasser) eingemischt. Dazu werden 0,5 g Borchi^{®} Kat 24 gegeben. Es werden 1 g WACKER^{®} SILIKAT TES 40 WN eingerührt. Der Verlauf der Vulkanisation wurde mittels eines Rheometers verfolgt (Anton Paar MCR301 mit PP25-SN Einmalmesssystem; [d=0,5 mm]. Frequenz 1 Hz, Deformation 10%). tan δ = 1 wurde nach 390 min erreicht.

Im Vergleich dazu zeigt Beispiel 1 die Effizienz des erfindungsgemäßen Härters, der mit nur 60% des Katalysators eine deutlich schnellere Vulkanisation ermöglicht.

### Beispiel 4

4 g Borchi^{®} Kat 24 und 1,33 g 2-(Diethylamino)ethanol werden 1 h auf 130°C erwärmt. Die Mischung ist klar und viskos.

In 50 g eines silanolterminierten Polydimethylsiloxans (Viskosität 1000 mPas) werden 0,05 g einer nichtionogen formulierten Öl-in Wasser Emulsion eines Polydimethylsiloxanes mittlerer Viskosität (50% Wasser) eingemischt. Dazu werden 0,5 g der Borchi^{®} Kat-Lösung gegeben. Es werden 1 g WACKER^{®} SILIKAT TES 40 WN eingerührt. Die Masse ist nach 2 h geliert.

### Beispiel 5

4,65 g Borchi^{®} Kat 24 (OMG Borchers GmbH, 40764 Langenfeld, Germany) und 2,08g N-(2-Hydroxyethyl)ethylendiamin werden 1 h auf 130°C erwärmt. Die Mischung ist klar und viskos.

In 50 g eines silanolterminierten Polydimethylsiloxans (Viskosität 1000 mPas) werden 0,05 g einer nichtionogen formulierten Öl-in Wasser Emulsion eines Polydimethylsiloxanes mittlerer Viskosität (50% Wasser), 2,5 g Wacker HDK^{®} V15, 0,5 g Geniosil^{®} GF91 (N-(2-aminoethyl)-3-aminopropyltrimethoxysilan von Wacker Chemie AG) eingemischt. Dazu werden 0,5 g der Borchi^{®} Kat-Lösung und 1 g WACKER^{®} SILIKAT TES 40 eingerührt. Die Masse ist nach 30 min geliert und nach 50 min aus dem Polyethylengefäß entformbar.

### Beispiel 6

4,65 g Borchi /R) Kat 24 und 5,85 g 2-{[2-(Dimethylamino)ethyl]-methylamino}ethanol werden 1 h auf 130°C erwärmt. 7,3 g dieser Mischung werden mit 29,2 g eines Polydimethylsiloxans (Viskosität 20 Pas) und 14,6 eines Polydimethylsiloxans (Viskosität 100 mPas) und 16,8 g Bis(triethoxysilylethan) und 8 g Geniosil^{®} GF 91 (Wacker Chemie AG) und 5 g HDK V15 (pyrogene Kieselsäure von Wacker Chemie AG) gemischt und stellt eine erfindungsgemässe Härterzusammensetzung dar.

10 Gewichtsteile Elastosil^{®} RT 774 (bestehend im Wesentlichen aus einem silanolendständigem Polydimethylsiloxan, einem trimethylsilylendständigem Polydimethylsiloxan, Wasser und Füllstoffen) werden mit 1 Gewichtsteil der Härterzusammensetzung vermischt. Die Topfzeit beträgt 10 Minuten.

Der Verlauf der Vulkanisation wird zusätzlich mittels eines Rheometers verfolgt (Anton Paar MCR301 mit PP25-SN Einmalmesssystem; [d=0,5 mm]. Frequenz 1 Hz, Deformation 10%). tan δ = 1 wird nach 20 min erreicht.

Die Elastosil^{®} RT 774/Härter-Mischung wird auf 2 mm Dicke gerakelt. Nach der Aushärtung wurden nach 4 Wochen S2 Prüfstäbe gestanzt und nach DIN 53505 und 53504 gemessen.

Zum Vergleich werden die Werte für das analog hergestellte Vulkanisat aus 10 Gewichtsteile Elastosil^{®} RT 774 und 1 Gewichtsteil des handelsüblichen Katalysators T77 (Wacker Chemie AG) angegeben.

| | **Shore A** | **Spannungswert 100%** | **Reissfestigkeit [N/mm2]** | **Reissdehnung [%]** |
|---|---|---|---|---|
| Beispiel 5 | 40 | 0,96 | 1,3 | 152 |
| RT 774 / T77* | 38 | 1,16 | 1,6 | 157 |

| | | | | |
|---|---|---|---|---|
| *nicht erfindungsgemäss | | | | |

### Beispiel 7

4,65 g Borchi /R) Kat 24 und 5,85 g 2-{[2-(Dimethylamino)ethyl]-methylamino}ethanol werden 5 min bei 23°C gerührt. 7,3 g dieser Mischung werden mit 29,2 g eines Polydimethylsiloxans (Viskosität 20 Pas) und 14,6 eines Polydimethylsiloxans (Viskosität 100 mPas) und 16,8 g WACKER^{®} SILIKAT TES 40 und 8 g Geniosil^{®} GF 91 (Wacker Chemie AG) und 5 g HDK V15 (Wacker Chemie AG) gemischt und stellt eine erfindungsgemäße Härterzusammensetzung H dar.

10 Gewichtsteile Elastosil^{®} RT 774 werden mit 1 GT des Härters vermischt. Die Elastosil^{®} RT 774/Härter-Mischung wird auf 2 mm Dicke gerakelt. Die Topfzeit beträgt 15 min. Nach der Aushärtung werden nach 4 Wochen S2 Prüfstäbe gestanzt und nach DIN 53505 und 53504 gemessen.

| | **Shore A** | **Spannungswert 100%** | **Reissfestigkeit [N/mm2]** | **Reissdehnung [%]** |
|---|---|---|---|---|
| Beispiel 7 | 25 | 0,58 | 1,6 | 407 |

### Vergleichsbeispiel 8 (nicht erfindungsgemäss)

7 g Borchi^{®} Kat 24 (Bismut (III) neodecanoat von OMG Borchers GmbH, 40764 Langenfeld, Germany) und 7 g

Tetramethylethylendiamin werden 1 h auf 130°C erwärmt. Die Mischung ist klar und viskos.

7,3 g dieser Mischung werden mit 29,2 g eines

Polydimethylsiloxans (Viskosität 20 Pas) und 14,6 eines Polydimethylsiloxans (Viskosität 100 mPas) und 16,8 g Bis(triethoxysilylethan) und 8 g Geniosil^{®} GF 91 (Wacker Chemie AG) gemischt und stellt einen nicht erfindungsgemäßen Härter dar.

10 Gewichtsteile Elastosil^{®} RT 774 werden mit 1 Gewichtsteil des Härters vermischt. Die Topfzeit beträgt mehr als 5 Stunden. Es zeigt sich, dass die Verwendung von Aminoalkylalkoholen wesentlich ist.

## Patentansprüche

1. Härterzusammensetzungen H für kondensationsvernetzende RTV-2-Systeme enthaltend
(A) mindestens einen an Siliciumatome gebundenene hydrolysierbare Gruppen aufweisenden Vernetzer,
(B) mindestens einen Katalysator, der ausgewählt wird aus Verbindungen von Titan, Cer, Zirkonium, Molybdän, Mangan, Kupfer, Zink, Bismut, Lithium, Strontium oder B und
(C) mindestens einen Aminoalkylalkohol

2. Härterzusammensetzungen H nach Anspruch 1, bei denen die Vernetzer (A) Organosiliciumverbindungen der allgemeinen Formel (I)
ZₐSiR¹₍₄₋ₐ₎ (I),
sind, wobei
R¹ gegebenenfalls substituierte Kohlenwasserstoffreste, die durch nicht benachbarte Heteroatome, ausgewählt aus Sauerstoff-, Stickstoff- und Schwefelatomen unterbrochen sein können,
Z hydrolysierbare Reste und
a die Werte 3 oder 4 bedeuten,
sowie deren Teilhydrolysate.

3. Härterzusammensetzungen H nach einem der vorangehenden Ansprüche, bei denen die Katalysatoren (B) Alkoxylate oder Carboxylate von Cer, Zirkonium, Bismut und Lithium sind.

4. Härterzusammensetzungen H nach einem der vorangehenden Ansprüche, bei denen die Aminoalkylalkohol-Komponente (C) der allgemeinen Formel (II)
R³R⁴N-R⁵-OH (II),
entspricht, bei der
R³, R⁴ H oder gegebenenfalls substituierte Kohlenwasserstoffreste, die durch nicht benachbarte Sauerstoffatome unterbrochen sein können, bedeuten und
R⁵ zweiwertiger Alkylrest mit 2 bis 12 Kohlenstoffatomen bedeutet, der durch nicht benachbarte Heteroatome ausgewählt aus Sauerstoff-, Stickstoff- und Schwefelatomen unterbrochen oder durch Amino-, Hydroxy- oder Alkoxygruppen substituiert sein kann.

5. Härterzusammensetzungen H nach einem der vorangehenden Ansprüche, bei denen pro 100 Gewichtsteile Vernetzer (A) 1 bis 500 Gewichtsteile Katalysator (B) enthalten sind.

6. Härterzusammensetzungen H nach einem der vorangehenden Ansprüche, bei denen pro 100 Gewichtsteile Vernetzer (A) 0,5 bis 300 Gewichtsteile Aminoalkylalkohol (C) enthalten sind.

7. RTV-2-Systeme, welche die Härterzusammensetzungen H nach einem der vorangehenden Ansprüche und feuchtigkeitshärtbare silylfunktionelle Polymere (D) enthalten, die Silylgruppen der allgemeinen Formel (III)
-L[-SiR⁶_{2-b}X_{b}-O]ₙ-SiR⁶_{3-c}X_{c} (III)
besitzen, wobei
L eine zweiwertige organische Gruppe,
X unabhängig voneinander eine hydrolysierbare Gruppe,
R⁶ ein Kohlenwasserstoffrest,
b die Werte 0, 1 oder 2,
c die Werte 0, 1, 2 oder 3,
b+c mindestens 1 und
n ganzzahlige Werte von 0 bis 16 bedeuten.

8. RTV-2-Systeme nach Anspruch 7, bei denen das Polymerrückgrat der silylfunktionellen Polymere (D) aus Polymeren besteht, die ausgewählt werden aus Polyester, Polyether, Polyurethan und Polyorganosiloxan.

## Claims

1. Hardener compositions H for condensation-crosslinking RTV-2 systems comprising
(A) at least one crosslinking agent having hydrolyzable groups bonded to silicon atoms,
(B) at least one catalyst selected from compounds of titanium, cerium, zirconium, molybdenum, manganese, copper, zinc, bismuth, lithium, strontium, and B, and
(C) at least one aminoalkyl alcohol.

2. Hardener compositions H according to Claim 1, in which the crosslinking agents (A) are organosilicon compounds of the general formula (I)
ZₐSiR¹₍₄₋ₐ₎ (I),
where
R¹ are optionally substituted hydrocarbon moieties which can have interruption by nonadjacent heteroatoms selected from oxygen atoms, nitrogen atoms, and sulfur atoms,
Z are hydrolyzable moieties, and
a is the value 3 or 4,
or else are partial hydrolyzates of these.

3. Hardener compositions H according to any of the preceding claims, in which the catalysts (B) are alkoxylates or carboxylates of cerium, zirconium, bismuth, or lithium.

4. Hardener compositions H according to any of the preceding claims, in which the aminoalkyl alcohol component (C) corresponds to the general formula (II)
R³R⁴N-R⁵-OH (II),
in which
R³ and R⁴ are H or optionally substituted hydrocarbon moieties which can have interruption by nonadjacent oxygen atoms, and
R⁵ is a divalent alkyl moiety having from 2 to 12 carbon atoms which can have interruption by nonadjacent heteroatoms selected from oxygen atoms, nitrogen atoms, and sulfur atoms, or can have substitution by amino groups, hydroxy groups, or alkoxy groups.

5. Hardener compositions H according to any of the preceding claims, in which from 1 to 500 parts by weight of catalyst (B) are present for every 100 parts by weight of crosslinking agents (A).

6. Hardener compositions H according to any of the preceding claims, in which from 0.5 to 300 parts by weight of aminoalkyl alcohol (C) are present for every 100 parts by weight of crosslinking agents (A).

7. RTV-2 systems which comprise the hardener compositions H according to any of the preceding claims and moisture-curable silyl-functional polymers (D) which have silyl groups of the general formula (III)
-L [-SiR⁶_{2-b}X_{b}-O]ₙ -SiR⁶_{3-c}X_{c} (III)
where
**L** is a divalent organic group,
**X** is mutually independently a hydrolyzable group,
**R⁶** is a hydrocarbon moiety,
**b** has the value 0, 1, or 2,
**c** has the value 0, 1, 2, or 3,
**b+c** is at least 1, and
**n** has integral values from 0 to 16.

8. RTV-2 systems according to Claim 7, in which the main chain of the silyl-functional polymers (D) consists of polymers selected from polyester, polyether, polyurethane, and polyorganosiloxane.

## Revendications

1. Compositions de durcisseur H pour des systèmes à 2 composants réticulant, par condensation, à température ambiante (RTV-2), contenant
(A) au moins un réticulant présentant des groupes hydrolysables liés à des atomes de silicium,
(B) au moins un catalyseur, qui est choisi parmi les composés du titane, du cérium, du zirconium, du molybdène, du manganèse, du cuivre, du zinc, du bismuth, du lithium, du strontium ou B et
(C) au moins un alcool aminoalkylique.

2. Compositions de durcisseur H selon la revendication 1, dans lesquelles les réticulants (A) sont des composés organosiliciés de formule générale (I)
ZₐSiR¹₍₄₋ₐ₎ (I),
dans laquelle
R¹ signifie des radicaux hydrocarbonés le cas échéant substitués, qui peuvent être interrompus par des hétéroatomes non adjacents, choisis parmi les atomes d'oxygène, d'azote et de soufre,
Z signifie des radicaux hydrolysables et
a signifie les valeurs 3 ou 4,
ainsi que leurs hydrolysats partiels.

3. Compositions de durcisseur H selon l'une quelconque des revendications précédentes, dans lesquelles les catalyseurs (B) sont des alcoxylates ou des carboxylates de cérium, de zirconium, de bismuth et de lithium.

4. Compositions de durcisseur H selon l'une quelconque des revendications précédentes, dans lesquelles le composant d'alcool aminoalkylique (C) correspond à la formule générale (II)
R³R⁴N-R⁵-OH (II),
dans laquelle
R³, R⁴ signifient H ou des radicaux hydrocarbonés, le cas échéant substitués, qui peuvent être interrompus par des atomes d'oxygène non adjacents, et
R⁵ signifie un radical alkyle divalent comprenant 2 à 12 atomes de carbone, qui peut être interrompu par des hétéroatomes non adjacents, choisis parmi les atomes d'oxygène, d'azote et de soufre, ou qui peut être substitué par des groupes amino, hydroxy ou alcoxy.

5. Compositions de durcisseur H selon l'une quelconque des revendications précédentes, qui contiennent 1 à 500 parties en poids de catalyseur (B) par 100 parties en poids de réticulant (A).

6. Compositions de durcisseur H selon l'une quelconque des revendications précédentes, qui contiennent 0,5 à 300 parties en poids d'alcool aminoalkylique (C) par 100 parties en poids de réticulant (A).

7. Systèmes RTV-2, qui contiennent les compositions de durcisseur H selon l'une quelconque des revendications précédentes et des polymères à fonctionnalité silyle, durcissables sous l'effet de l'humidité (D), qui présentent des groupes silyle de formule générale (III)
-L[-SiR⁶_{2-b}X_{b}-O]ₙ-SiR⁶_{3-c}X_{c} (III)
dans laquelle
L signifie un groupe organique divalent,
X signifie, indépendamment les uns des autres, un groupe hydrolysable,
R⁶ signifie un radical hydrocarboné,
b signifie les valeurs 0, 1 ou 2,
c signifie les valeurs 0, 1, 2 ou 3,
b + c vaut au moins 1 et
n signifie des valeurs entières de 0 à 16.

8. Systèmes RTV-2 selon la revendication 7, dans lesquels la chaîne principale polymère des polymères à fonctionnalité silyle (D) est constituée de polymères qui sont choisis parmi le polyester, le polyéther, le polyuréthane et le polyorganosiloxane.
